# EUROPEAN PATENT SPECIFICATION

(11) **EP 3 007 401 B1**
(45) Date of publication and mention of the grant of the patent: **28.06.2017**
(21) Application number: 14188078.1
(22) Date of filing: 08.10.2014
(51) Int. Cl.: H04L 29/06

(54) **INTEGRATION OF WEBRTC BASED CLIENTS INTO IMS WITHOUT SIP REGISTRATION**
INTEGRATION VON WEBRTC-BASIERTEN CLIENTS IN IMS OHNE SIP-REGISTRIERUNG
INTÉGRATION DE CLIENTS WEBRTC SUR IMS SANS ENREGISTREMENT SIP

(43) Date of publication of application: 13.04.2016
(73) Proprietor: Deutsche Telekom AG, 53113 Bonn (DE)
(72) Inventor: Sivchenko, Dmitry, 64331 Weiterstadt (DE); Maruschke, Michael, 04275 Leipzig (DE); Zimmermann, Jens, 64372 Ober-Ramstadt (DE)
(74) Representative: Braun-Dullaeus Pannen Patent- und Rechtsanwälte

(56) References cited:
- US-A1- 2014 219 167
- Tilmann Bach ET AL: "Combination of IMS-based IPTV Services with WebRTC", , 22 June 2014 (2014-06-22), XP055175228, Retrieved from the Internet: URL:http://www.researchgate.net/profile/Ka y_Haensge/publication/272476814_Combinatio n_of_IMS-based_IPTV_Services_with_WebRTC/l inks/54e4a34f0cf276cec171d1ac.pdf?origin=p ublication_detail [retrieved on 2015-03-10]

## Description

### Field of the invention:

The invention relates to a method and system for efficient integration of Web Real Time Communication ("WebRTC") based clients into IP Multimedia Subsystem ("IMS").

### Description of the prior art:

The SIP (Session Initiation Protocol) based IMS is the basic session control system used by telecommunication operators to provide their multimedia communication services like voice/telephony to customers in IP based networks. In order to use IMS services an IMS or a SIP client must be installed on the user device, either built into the operating system of the device by default or installed separately by the user. For the integration of analogue and/or Integrated Services Digital Network ("ISDN") telephones into the IMS based infrastructure, various gateway devices are used offering analogue and/or ISDN typically interfaces for the connection of end devices and using SIP for signalling and Real Time Transport Protocol (RTP) for media transport towards IMS.

IP based devices like computers or smartphones usually have a separate IMS/SIP client so that no additional gateways are required. The usage of a separate SIP client on user device is one of the IMS drawbacks. In order to use IMS services signalled through the IMS core network the SIP client must support the unique definite signalling used in the IMS for the session management. That is why SIP is standardised in order to enable interoperability between different clients and IMS core networks. However, for the introduction of new services on the basis of IMS, an update of SIP clients is often necessary. Continuous updating of IMS clients for different operating systems and Operation Systems (OS) versions is another challenge for having an add-on signalling client on the user device.

WebRTC suite has been defined in the initial phase and actively developed (IETF. RtCweb status pages. http://tools.ietf.org/wg/rtcweb/ or C. Jennings, A. Narayanan, D. Burnett, and A. Bergkvist, "WebRTC 1.0: Real-time communication between browsers," W3C, W3C Working Draft, 01 July 2014, http://dev.w3.org/2011/webrtc/editor/archives/20140704/webrtc.html, retrieved: July, 2014).

WebRTC introduces support for multimedia communication direct from Web Browsers as Chrome, Firefox and Opera. The complete logic of multimedia application is downloaded to the browser in form of a JavaScript so that no adaptation of additional applications is required on the device. Any IP device having a WebRTC capable Web browser can participate in the communication using WebRTC.

WebRTC does not define any particular signalling protocol. That is why developers can choose the most appropriate protocol for their special use case. So it is possible to implement new communication features, faster. In this sense, WebRTC enables new architectures and protocols for the control/signalling plane.

For the consumer it would be meaningful to communicate from a WebRTC based browser device to any other existing legacy Voice- and Video-Telephony devices like 2G or 3G mobile phones or analogue/ISDN telephones or SIP User Agents. Therefore, the interoperability of WebRTC clients with IMS is necessary to enable communication between WebRTC and IMS/PSTN users. The current architecture for the integration of WebRTC clients to IMS is defined in 3GPP TS 23.228 V12.5.0 Annex U (2014-06).

In that prior art, Register Signalling messages invoke processing of almost all components within IMS core. In real carrier-grade IMS installations with millions of registered subscribers the traffic load generated by SIP Register messages can reach up to 95% of the complete IMS signalling capacity. IMS components must therefore be planned and dimensioned mainly for processing of SIP registration traffic not only from legacy SIP devices, but also from WebRTC clients connected to the IMS using this prior art approach. By doing that, the capacity of IMS components involved in Register signalling procedures must be doubled in the worst case. That has a dramatic impact on the economics of IMS deployments, the performance of the IMS platform in case of fluctuating subscriber numbers and the flexibility of the whole IMS core in the case that the registration timers are changed (firstly decreased) or more subscribers must be served.

In that context US 2014/0219167 A1 discloses a network initiated and client initiated mecanisms to enable quality of service (QoS) for web besad client applications. Besides the paper "Combination of IMS-based IPTV Services with WebRTC" from Tilman Bach et al published in June 22th 2014 describes the potential to combine IP Multimedia Subsystems (IMS)-based IP Television (IPTV) services with a web-browser technology.

### Object of the invention:

The object of the present invention is to provide a method and a system for integrating WebRTC based clients into IMS alternative to standardized solution and with a reduced traffic load produced by SIP Register signalling messages.

### Summary of the invention:

The invention is defined by a method according to claim 1 and a system according to claim 8. Further embodiments are described in the dependent claims.

The invention concerns a method and a system for the integration of WebRTC clients into a Multimedia Subsystem ("IMS") by implementing a new WebRTC Application Server ("WAS") into the IMS core. This new WAS has an access to the respective subscriber register, especially to the Home Subscriber Server ("HSS"). The invention comprises the steps: WebRTC client registers with the WAS using a protocol applying IMS credentials due to access of WAS to the subscriber registers especially the HSS. Further WAS modifies initial Filter Criteria ("iFC") by entering itself to the iFC set in the HSS upon successful registration of WebRTC client with the WAS and by deleting itself from the iFC set in the HSS upon customer deregistration.

By this, SIP register procedure is not necessary for registration of WebRTC clients with IMS core.

The WAS enters itself into iFC for relevant SIP messages the operator want to forward also to WebRTC clients (e.g. INVITE, MESSAGE, INFO, etc.) for session cases terminating registered as well as terminating unregistered. That is necessary to send the message to the WAS independently whether another SIP clients of the subscriber with the same telephone number used on the WebRTC client are registered with IMS or not.

A WebRTC-based Web application is defined as a full IMS endpoint with which the user logs on to the network and can interact with this. In order to realize a communication with the IMS, the WAS must provide the ISC interface. Call signalling is passed between WebRTC clients and traditional IMS terminals via the WAS. To receive call signalling as a WebRTC client, corresponding iFCs, must be defined. For interconnection to the media level with traditional IMS terminals, standardized components such as the eIMS-AGW will be used. A special feature of the invention is that the users of WebRTC clients can use their traditional IMS IDs.

With the inventive method QoS and emergency functions can be realised. The AS is arranged within a traditional IMS and has the necessary function blocks to ensure these functionalities. The requirement of load efficiency is guaranteed. It does not necessarily require an IMS registration of WebRTC clients, but can occur via other mechanisms. When IMS registration is omitted, there are no re-registration procedures which generate most of the load in traditional telephone networks.

A significant advantage of the inventive concept is that WebRTC is offered as an additional alternative for audio and video communication in an IMS. In this no IMS registration needs to be performed. Users can re-use their user-specific credentials which are already created. It is therefore effective to integrate WebRTC based clients in an IMS -based infrastructure.

By this the invention introduces a new method and system for the integration of WebRTC based clients into IMS without usage of SIP register messages. By using the proposed method all IMS services available for WebRTC clients integrated with IMS using legacy method are still available while WebRTC clients do not generate any additional SIP Register traffic load in the IMS network.

### Brief description of the drawings:

- **Figure 1**: shows the connection of WebRTC clients to IMS as currently defined in prior art,
- **Figure 2**: discloses a proposed connection of WebRTC clients to the IMS and
- **Figure 3**: illustrates the internal architecture of the proposed WebRTC Application Server (WAS).
- **Figure 4**: Registration of a WC.
- **Figure 5**: Signalisation for an incoming call.
- **Figure 6**: Signalisation for an outgoing call.

### Detailed description of a preferred embodiment:

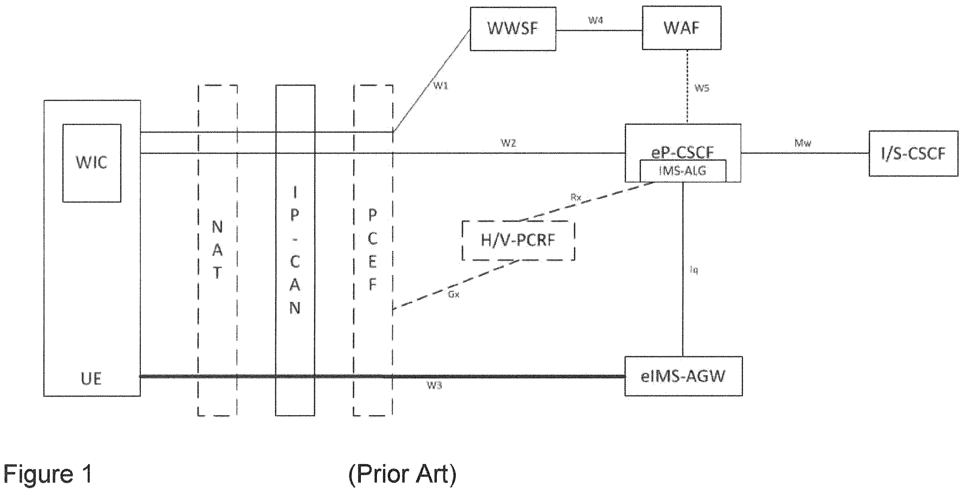

**Figure 1** shows the prior art WebRTC IMS architecture. This WebRTC IMS architecture is explained in TS 23.228 (especially in V 12.5.0) Annex U. The WWSF (WebRTC Web Server Function) is located either within the operator network or within a third party network and is the web server contacted by the user agent. Following the components are explained:
The UE (User Equipment) is a terminal with a WebRTC enabled browser. The UE must have an IP connectivity to be able to download a client application from a WWSF. The UE does not have mandatory IMS functions, but may communicate with the network via the standard Gm interface by implementing appropriate functions.

A WebRTC IMS client **(WIC)** is a WebRTC JavaScript application that has all the features to interact with the architecture shown in figure 1. WIK is an application using the WebRTC extensions specified in the standard and providing access to the IMS network based architecture. The WIC is integrated part of the User Equipement (UE) in this standardized proposal. The application is downloaded from a WWSF and executed in a WebRTC enabled browser or an adequate JavaScript execution environment on the UE. The WIC shall support all the typical IMS functionalities. It shall be able to use Web authentication in addition to the standardized IMS registration and authentication.

The WebRTC Web Server Function (**WWSF**) is the initial point of contact for the user. It provides a web page, which is the user interface (UI) for the user.

Furthermore, the WWSF makes the JavaScript WIC application available which may be downloaded and executed by the web browser on the UE.

The enhanced Proxy Call Session Control Function (**eP-CSCF**) is the endpoint for the signalling connection from the client and is located in the operator network. It is a P-CSCF according to the 3GPP TS 23.228 specification with extensions for WebRTC. The eP-CSCF should support at least a common signalling variant. This can be among other SIP or XMPP over WebSocket. For this proxy server must perform a transcription from W2 to Mw interface. Besides this eP- CSCF should control the media data conversion functions that are provided by the eIMS-AGW.

By using current approach the client performs registration with the IMS core via W2 interface by using its identity either using SIP over WebSocket or by using other proprietary signalling that is converted to SIP in an intermediate gateway (separate or collocated with the enhanced P-CSCF). SIP Register Messages are used latest on Mw interface in the IMS core to register the WebRTC user as a regular IMS subscriber.

The **eIMS-AGW** is a standard IMS-AGW which has been extended for WebRTC. Media data are exchanged between UE and eIMS-AGW that converts sRTP (secure Real Time Transport Protocol) used in WebRTC to RTP used in IMS over W3 interface. The AGW shall support the media data extensions that are used in WebRTC. Since interoperability between WebRTC - based clients and traditional IMS clients is not possible without converter, is this component of great importance. WebRTC-based clients mandatory use SRTP for data transfer, which is not supported by traditional IMS terminals. Therefore it must support DTLS-SRTP as the exchange mechanism as well as the SRTP. Even the AGW must provide functions for overcoming NAT which mainly involve the ICE mechanisms. The elMS AGW should also act as a transcoder and support the common WebRTC codecs. Therefore the eIMS-AGW must act as full WebRTC counterpart.

The WebRTC Authorisation Function (**WAF**) is used to authenticate the user for downloading the Web page from WWSF. It creates an authentication token for the user and deliver it to the WWSF. This function can thereby authenticate the user in the token creation process or she trusts the user identity that it has received from the WWSF.

The WebRTC IMS architecture supports different IMS registration scenarios that may differ in the authentication method, and ownership of the WWSF (i.e. operator network or third party). After initial registration the client generate SIP Re-registration messages according to the Expire timer configured in the IMS core. Latest after eP-CSCF SIP Register messages are used for this process. Periodic application level re-registration is initiated by the UE either to refresh an existing registration or in response to a change in the registration status of the UE (TS 23.228, clause 5.2.2.4).

Besides, in figure 1 the shortcut "**NAT**" means Network Address Translation, **"IP-CAN**" is the IP-Connectivity Access Network and **PCEF** the Policy and Charging Enforcement Function. **PCRF** is the Policy Control Rule Function.

The **W1** interface is located between the UE and the WWSF. The protocol to be used for this reference point is the HTTPS protocol to access the website and download the WIC JavaScript application

The **W2** reference point is located between the UE and eP-CSCF. A protocol to be used is not defined but the favourite is SIP transmitted over a WebSocket connection. The new approach uses a **W2*** reference point between UE and the inventive WAS.

**W3** is the reference point between the UE and the eIMS-AGW. Media data are transmitted via this interface. Also the key exchange for SRTP using DTLS and signalling is done via this interface to overcome NAT using STUN.

**W4** is the signalling interface between the WWSF and WAF. Via this reference point the WWSF gets a authorising token from WAF which confirms the identity of the user.

The **W5** reference point is an optional signalling interface between the WAF and eP-CSCF.

The **Iq*** interface is located between the eP-CSCF and the eIMS-AGW. This reference point was extended to control the additional media transfer functions which are specific for WebRTC.

The architecture shown in **figure 1** supports different scenarios for registration which differ in their method of authentication. One scenario is the IMS authentication another scenario is the Web authentication. Both are explained in TS 23.228.

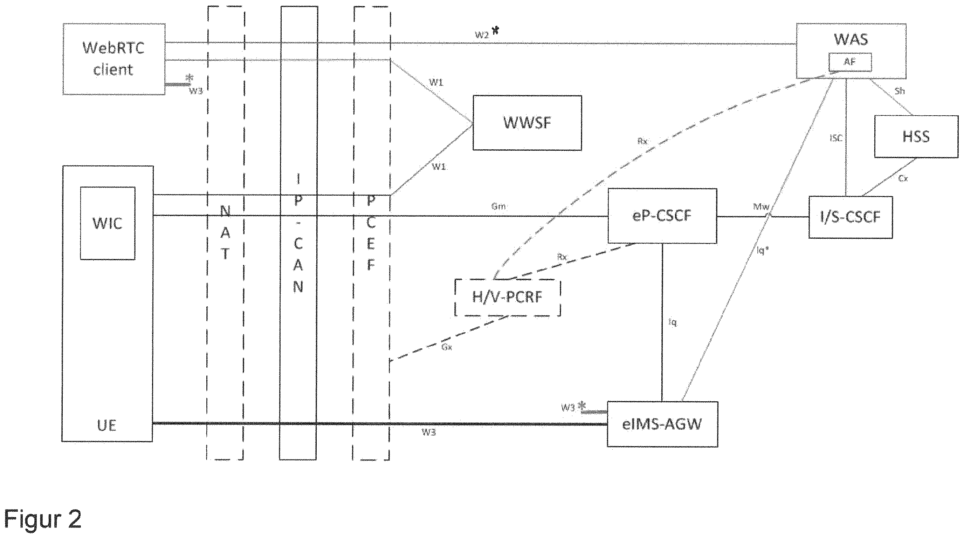

For reducing the traffic of signalling messages it is proposed to connect the WebRTC Application Server serving WebRTC customers by using ISC interface as an additional IMS application server that will supersede the need of SIP Register messages in IMS core network. **Figure 2** shows the proposed integration of WebRTC clients to the IMS compared to the actual architecture followed by the WebRTC and IMS community.

The usage of WWSF and W1 interface is not modified in the proposal and is used to download Java Script with the WebRTC application that will run on the client.

The WebRTC client (WC) is a WebRTC JavaScript application that implements all the functions to interact with the architecture that is running on a WebRTC-enabled device. The WC is a combination of application and hardware. The application is downloaded it from a WWSF and running on the WebRTC-enabled device or an adequate JavaScript execution environment. The WebRTC-enabled terminal is a terminal which provides a WebRTC-enabled web browser. In contrast to the WIC the WC dispenses with an IMS registration. There is only an identity check of the user based on the user-specific credentials.

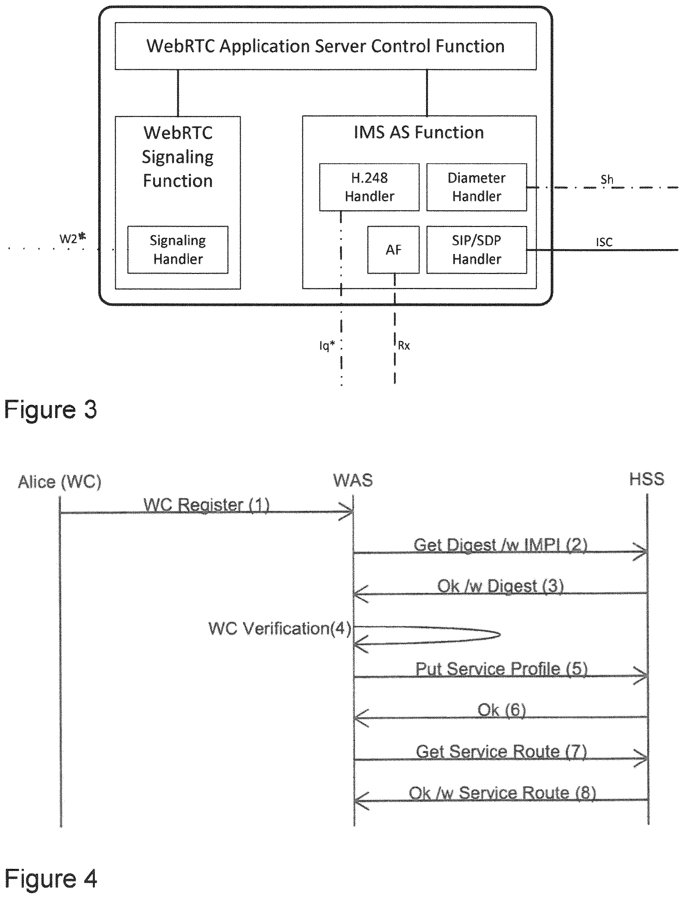

The invention proposes an additional WebRTC Application Server (WAS) that the link between WC and the IMS network. The WAS has a WebRTC signaling function for connection with the WCs. The WAS is connected to the S-CSCF in IMS with ISC interface (and/or to the I-CSCF using Ma interface). By this, eP-CSCF is not longer used for the signalling with WebRTC users. SIP Register messages are not used in the IMS core for WebRTC users as well. **Figure 3** shows the architecture of the proposed WebRTC Application Server.

The new WAS implements functions of a legacy IMS Application Servers so that it has a "read/write"- access over the Sh interface to the HSS database with stores user profiles.

In order to enable Quality of Service (QoS) for WebRTC clients, the IMS Application Function (AF) is implemented in the WAS. Interaction with the Policy Control Rule Function (PCRF) for resource management in the transport network is available for WAS via Rx interface. For media handling with Access-Border Gateway Functions (A-BGF) the WAS implements the H.248 protocol based Iq* interface to the existing eIMS-AGW. Alternatively, the WAS can introduce or co-locate any own media handling function in order to control and convert the payload traffic transported with sRTP in WebRTC and RTP in IMS. The Iq* interface is an internal interfaces in this case. Additional media processing functions - eIMS-AGW must then be implemented/co-located in the WAS. By doing that W3 interface is then between UE and eIMS-AGW implemented/co-located in the WAS, that follows the same path in the network as W2* interface. Other additional interfaces typically available on IMS Application Servers can be implemented on the WAS - for example Rf for accounting or X1/X2/X3 for Lawful Interception.

The two function blocks are controlled by the WebRTC Application Server Control Function (WASCF). This WASCF passes messages between the two function blocks, performs identity verification of registered users and controls the handlers for database access, QoS and media conversion.

For user authentication and signalling between WAS and WebRTC client any protocol on W2* interface can be used. Via the W2* interface the signalling messages for call setup or the like can be transferred. A protocol used is not defined for this interface. It notes that after the successful connection between WC and WHAT, user identity information is transferred.

Since WAS has access to the HSS via the Sh interface, it has access to IMS user credentials. The WebRTC client can therewith be authenticated on the WAS by using its IMS credentials. The authorisation process is not limited to this method and any other authentication method can be used on W2* (e.g. OpenID or similar).

To verify the identity of the user who has established a connection with the WAS, the WAS reads the credentials from the central HSS database. If the WebRTC signaling function receives a message, it is forwarded to the WASCF which in turn activates the appropriate handler of the IMS AS function.

The information received is delivered to WASCF to perform a verification of the user. After successful verification the WAS updates the service profile of the user. For that the WASCF again controls the appropriate handler in the IMS AS Function and provides the service profiles. In this service profiles the iFC and the trigger point is stored so that future calls will be routed to that WAS. If the WebRTC connection is lost or a user terminates the connection the iFC is disabled again. If a call is dropped or obtained WASCF controls the appropriate handler for QoS and the media conversion and performs conversion of the message interface W2* to the ISC interface and vice versa. To allow access to user-specific information located in the HSS, the WAS must be located in the network of the operator and should not be provided by a third party.

In result of the authentication process the WAS knows the IMS Public User Identity (IMPU) of the WebRTC user. By using Sh interface the WAS enters itself into the initial filter criteria (iFC) set associated with the IMPU. The WAS is triggered by all incoming messages to IMPU in both cases, where IMPU is registered using the legacy SIP registration procedures but also if no SIP registration has been performed in IMS for IMPU. In this way all incoming calls (destined to this known IMPU) after iFC modification will be delivered to the WAS independently whether IMPU is registered in IMS using SIP registration procedure or not registered at all.

For incoming calls the WAS forwards the call using the appropriate protocol on W2* interface to the WebRTC client so that the call can be established. During call establishment the Rx interface from the AF collocated on the WAS can be used to enable QoS support for the multimedia session being established.

The WAS works as a Forking Proxy (a Stateful SIP Proxy Server), forks signalling messages and enters itself into the SIP Route. The WAS forwards the incoming session control messages to the WebRTC client and also sends the relevant SIP signalling messages back to the S-CSCF. The incoming call is then also received on legacy IMS terminals registered with the same IMPU by using SIP registration. After receiving answer message from a client (either 200 OK via the IMS core or appropriate signalling message over W2* interface), the other leg of the call can be cleared. The SIP method CANCEL is used for clients registered with the IMS on the regular way and the appropriate signalling message is used over W2* interface for WebRTC clients.

For outgoing sessions originating from the WebRTC client the signalling over W2* is converted to the IMS SIP by the WAS and is sent to the IMS core over the ISC interface from the WAS. Application Function in the WAS can again be involved in the call setup process in order to enable QoS for the multimedia session.

The keep-alive mechanism over W2* interface used to determine the availability of the WebRTC client is out of scope of this patent application. Efficient light web technologies can be used for this purpose, push notifications can be used as well. In the case WAS takes the decision the WebRTC client is not available anymore, WAS deletes itself from the iFC. This procedure is done over the Sh interface.

Subsequently, the invention is explained with reference to a registration of a user and to the signalling sequence for incoming and outgoing calls. The entities in the flow charts have markings that are specified in parentheses after the name of the user. Either a WC application is used or the term "legacy" specifies that an application or device that communicates over the Gm interface with a P - CSCF is used.

In figure 4 the registering of a user using a WC is shown: In step 1 the users of the WC application sends its private user identifier and a hash value made of user-specific information on the WAS. The WHAT makes a request to the database server in order to obtain the hash value of the user that is stored. The respective steps 2 and 3 are transmitted by standard-compliant messages over the Sh interface. Upon receipt of the hash value a verification step 4 is performed. Are the hash value of the user and the hash value from the database are identical, the WebSocket connection is maintained. If they don't match the WebSocket connection is disconnected by WAS with the appropriate WebSocket status code.

If the verification is successful, the user profile for that user which is also located in the HSS is updated whereby the WAS creates an iFC and adds a matching SPT. The SPT is used for the SIP INVITE method. With that all SIP INVITE messages are routed directly to WAS. Furthermore, the WAS adds its own address in the application server element of the iFC and forwards the iFC to the database server (step 5).

For sending calls from a WC a "service route" is needed. This route includes the address of S-CSCF which is responsible for this user. Normally, the "Service Route" send in the "200 OK" following a SIP register message. However, since this message is omitted, the WAS must retrieve it from the database (step 7 and step 8). After these steps, the WC user is authenticated and can receive and initiate calls by the registered trigger Point. This concept avoids additional re-registration processes because disconnections are detected by the WebSocket connection. For emergency case the IP address of the current WebSocket connection is used.

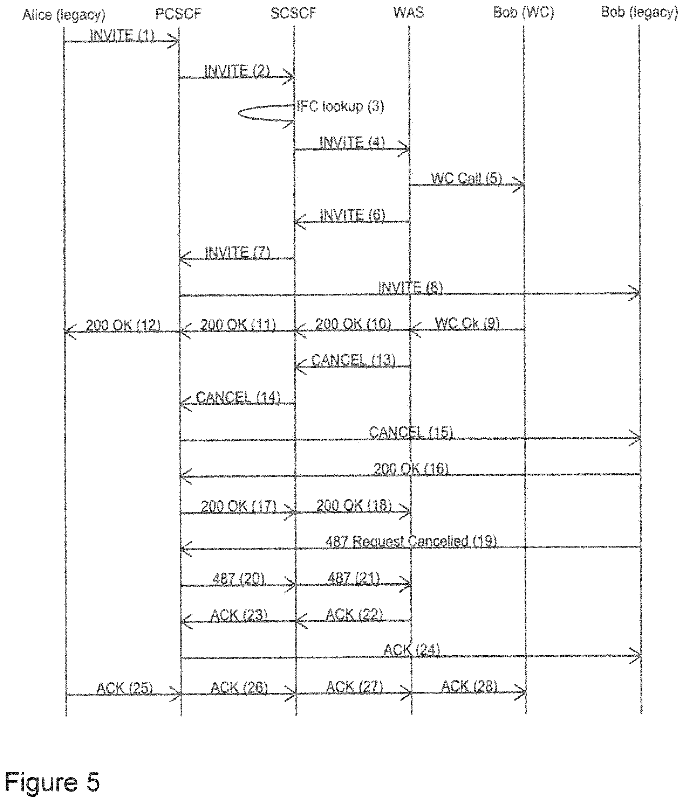

During an incoming call the user "Bob" receives an incoming call at both its WC-based and on his legacy terminal (**figure 5**). Now the iFCS and the so-called SIP forking is of importance. In steps 1 and 2 a SIP INVITE message is generated and sent over a P-CSCF to an S-CSCF. The user "Alice" uses her standard IMS UE and no WebRTC client. If the S-CSCF receives the message, the user profile of that user is checked for whom the message is intended. In step 3 an examination of the iFCS and the given trigger point occurs. If the called user has a WC account the service profiles of the WAS has already been inserted. In step 4 the "INVITE" message is routed to the WAS. In step 5 the WAS forwards the message via the WebSocket connection to the WC of the user to be called.

In step 6 the message is returned to the S-CSCF. This SIP forking has the advantage that the call is not only sent to WC but also to a legacy terminal. With that multiple dialogs can be created with just one query. To avoid that the request is not sent again to the WAS for the user to call, the WAS makes entries in the SIP header fields. Steps 6 through 8 show the routing of the message to the legacy device. After steps 5 and 8 the call is parallel on the WC and the legacy device which ring at the same time.

Depending on which device answers the call, the response messages are sent via the WAS to the calling user. In steps 9 to 12 the call is accepted by Bob's WC. Once the message reaches the WAS, a SIP CANCEL message is generated in step 13 and sent to the non accepting unit. Steps 10 and 13 take place at the same time. Upon receipt of a CANCEL a corresponding response is sent (step 16). Then the terminal which received the CANCEL generates a message to indicate the termination of the call (step 19). For this purpose a 487 Request Cancelled is sent to the WAS.

Similarly, if a 200 OK received, an ACK must be generated and sent to complete the three-way handshake. This can be seen in steps 19 to 24. Steps 25 through 28 are the response messages to the 200 OK to the receiving party. Thus, the three-way handshake of the SIP has been successfully completed and the transmission of media starts. By the entries in the SIP header fields, the WAS stays in the signalling chain for the complete dialogue.

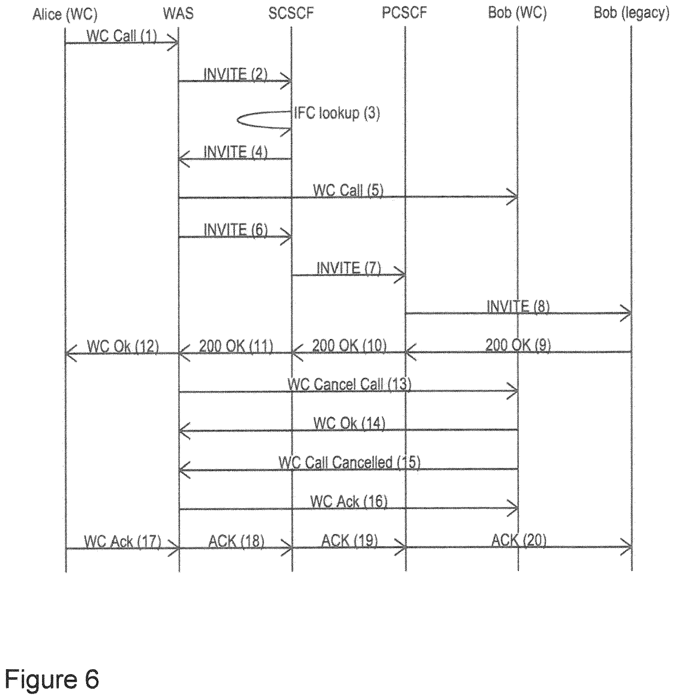

According to **figure 6** the user "Alice" calls with her WC-terminal user "Bob", who answers with a legacy device. In step 1 the initial call setup is sent from the WC to the WAS. Since in this request, the information is missing, where this message has to be routed, the WAS has to append "Service Route" obtained in the registration phase. The WAS has to generate a SIP INVITE message and insert the "Service Route" into the header of the INVITE message. Besides the WAS enters his address in the respective header fields to ensure that the correct routing path will be used for future messages of the dialog. In step 2 the WAS forwards the customized message to the S-CSCF. The S-CSCF balances the service profile of the called user. Steps 3-19 are identical to those in the logic for an incoming call.Since the call is adopted from a legacy device, in step 13 the WC Cancel message has to be sent to the WC of user Bob. The sequential order is corresponding to the three-way handshake, like it is used in SIP.

A checkout of the WC from WAS or an interruption of the WebSocket connection is recognized by the WebSocket protocol. Then WAS has to update the service profile of the user and disable the trigger point and the iFC, which is responsible for forwarding the messages to the WAS for this user. If no WC is logged on for the user, the messages may not be sent to the WAS. The signalling sequence thus corresponds to a standardized sequence as defined for the communication in an IMS.

## Claims

1. Method for integrating a WebRTC client into an IP Multimedia Subsystem whereby a corresponding WebRTC Application Server is implemented in the IP Multimedia Subsystem core as an Application Server which has direct access to a Home Subscriber Server,
**characterised in that** the WebRTC client registers with the WebRTC Application Server using a protocol applying IP Multimedia Subsystem credentials due to access the WebRTC Application Server to the Home Subscriber Server and the WebRTC Application Server modifies initial Filter Criteria by entering itself to the initial Filter Criteria set in the Home Subscriber Server upon successful registration of the WebRTC client with the WebRTC Application Server and by deleting itself from the initial Filter Criteria set in the Home Subscriber Server upon deregistration of the WebRTC Client.

2. Method according to claim 1,
**characterised in that** the WebRTC Application Server uses a W2* interface for exchanging signalling messages with the WebRTC client.

3. Method according to claim 1 or claim 2,
**characterised in that** the WebRTC Application Server uses ISC interface for communication with a Interrogating/Serving Call Session Control Function.

4. Method according to one of the preceding claims,
**characterised in that,** the WebRTC Application Server implements H.248 Iq* interface to control the enhanced IMS Access Gateway for media processing.

5. Method according to one of the preceding claims,
**characterised in that,** the WebRTC Application Server alternatively is co-located with the enhanced IMS Access Gateway functionality in the same network entity for media handling functions for converting between sRTP and RTP.

6. Method according to one of the preceding claims,
**characterised by,** the WebRTC Application Server authenticates the WebRTC subscriber using an authentication mechanism with the result that the WebRTC Application Server knows the IMPU of the WebRTC user.

7. Method according to one of the preceding claims,
**characterised by,** the WebRTC Application Server authenticates the WebRTC subscriber using its IP Multimedia Subsystem credential by utilising Sh interface to the Home Subscriber Server.

8. System for executing the method according to one of the preceding claims, comprising a WebRTC client integrated into an IP Multimedia Subsystem, a WebRTC Application Server which is implemented into the IP Multimedia Subsystem core as an Application Server with direct access to the Home Subscriber Server,
whereby the WebRTC client is configured to register with the WebRTC Application Server using a protocol applying IP Multimedia Subsystem credentials due to access the WebRTC Application Server to the Home Subscriber Server, whereby the WebRTC Application Server is configured to modify initial Filter Criteria by entering itself to the initial Filter Criteria set in the Home Subscriber Server upon successful registration of the WebRTC client with the WebRTC Application Server and by deleting itself from the initial Filter Criteria set in the Home Subscriber Server upon deregistration of the WebRTC client.

9. System according to claim 8,
**characterised by an**
W2* interface between the WebRTC client and the WebRTC Application Server for exchanging signalling messages.

## Patentansprüche

1. Verfahren zur Integration eines WebRTC-Clients in ein IP-Multimedia-Subsystem, wobei ein entsprechender WebRTC-Anwendungsserver in dem IP-Multimedia-Subsystemkern als ein Anwendungsserver implementiert ist, der direkten Zugriff auf einen Home Subscriber Server hat,
**dadurch gekennzeichnet, dass**
der WebRTC-Client sich bei dem WebRTC-Anwendungsserver unter Verwendung eines Protokolls registriert, das IP-Multimedia-Subsystem-Anmeldeinformationen zum Zugreifen des WebRTC-Anwendungsservers auf den Home-Subscriber-Server anwendet, und der WebRTC-Anwendungsserver anfängliche Filterkriterien modifiziert, indem er sich selbst in die anfänglichen Filterkriterien eingibt, die in dem Home Subscriber Server gesetzt sind, bei einer erfolgreichen Registrierung des WebRTC-Clients bei dem WebRTC Anwendungsserver, und indem er sich selbst aus den anfänglichen Filterkriterien löscht, die in dem Home Subscriber Server gesetzt sind, bei einer Deregistrierung des WebRTC-Clients.

2. Verfahren nach Anspruch 1,
**dadurch gekennzeichnet, dass** der WebRTC-Anwendungsserver zum Austausch von Signalisierungsnachrichten mit dem WebRTC-Client eine W2*-Schnittstelle verwendet.

3. Verfahren nach Anspruch 1 oder 2,
**dadurch gekennzeichnet, dass** der WebRTC Anwendungsserver eine ISC-Schnittstelle für eine Kommunikation mit einer Interrogating/Serving Call Session Control Function verwendet.

4. Verfahren nach einem der vorhergehenden Ansprüche,
**dadurch gekennzeichnet, dass** der WebRTC-Anwendungsserver eine H.248 lq*-Schnittstelle implementiert, um das erweiterte IMS Access Gateway für die Medienverarbeitung zu steuern.

5. Verfahren nach einem der vorhergehenden Ansprüche,
**dadurch gekennzeichnet, dass** der WebRTC Anwendungsserver alternativ mit der erweiterten IMS Access Gateway Funktionalität in der gleichen Netzwerkeinheit angeordnet ist, für Medienhandhabungsfunktionen zur Umwandlung zwischen sRTP und RTP.

6. Verfahren nach einem der vorhergehenden Ansprüche,
**dadurch gekennzeichnet, dass** der WebRTC-Anwendungsserver den WebRTC-Subscriber über einen Authentifizierungsmechanismus authentifiziert, mit dem Ergebnis, dass der WebRTC Anwendungsserver die IMPU des WebRTC-Benutzers kennt.

7. Verfahren nach einem der vorhergehenden Ansprüche,
**dadurch gekennzeichnet, dass** der WebRTC Anwendungsserver den WebRTC-Subscriber unter Verwendung seiner IP-Multimedia-Subsystem-Anmeldeinformationen authentifiziert, indem er eine Sh-Schnittstelle zu dem Home Subscriber Server verwendet.

8. System zum Ausführen des Verfahrens nach einem der vorhergehenden Ansprüche, aufweisend
einen WebRTC-Client, der in ein IP-Multimedia-Subsystem integriert ist,
einen WebRTC Anwendungsserver, der in den IP-Multimedia-Subsystemkern als Anwendungsserver mit direktem Zugriff auf den Home Subscriber Server implementiert ist,
wobei der WebRTC-Client dazu konfiguriert ist, sich bei dem WebRTC-Anwendungsserver unter Verwendung eines Protokolls anzumelden, das die IP-Multimedia-Subsystem-Anmeldeinformationen zum Zugreifen des WebRTC-Anwendungsservers auf den Home-Subscriber-Server anwendet, wobei der WebRTC-Anwendungsserver dazu konfiguriert ist, die anfänglichen Filterkriterien zu modifizieren, indem er sich selbst in die anfänglichen Filterkriterien eingibt, die in dem Home Subscriber Server gesetzt sind, bei einer erfolgreichen Registrierung des WebRTC-Clients, und indem er sich selbst aus den anfänglichen Filterkriterien löscht, die in dem Home Subscriber Server gesetzt sind, bei einer Deregistrierung des WebRTC-Clients.

9. System nach Anspruch 8,
**gekennzeichnet durch** eine W2*-Schnittstelle zwischen dem WebRTC-Client und dem WebRTC-Anwendungsserver zum Austausch von Signalisierungsnachrichten.

## Revendications

1. Procédé d'intégration d'un client WebRTC dans un sous-système multimédia IP, moyennant quoi un serveur d'application WebRTC correspondant est implémenté dans le coeur de sous-système multimédia IP comme un serveur d'application qui a un accès direct à un serveur d'abonné résidentiel,
**caractérisé en ce que**
le client WebRTC s'enregistre sur le serveur d'application WebRTC en utilisant un protocole appliquant des identifiants confidentiels de sous-système multimédia IP en raison de l'accès du serveur d'application WebRTC au serveur d'abonné résidentiel et le serveur d'application WebRTC modifie des critères de filtres initiaux en s'entrant soi-même dans les critères de filtre initiaux réglés dans le serveur d'abonné résidentiel lors d'un enregistrement réussi du client WebRTC sur le serveur d'application WebRTC et en se supprimant soi-même des critères de filtres initiaux réglés dans le serveur d'abonné résidentiel lors d'un désenregistrement du client WebRTC.

2. Procédé selon la revendication 1,
**caractérisé en ce que** le serveur d'application WebRTC utilise une interface W2* pour échanger des messages de signalisation avec le client WebRTC.

3. Procédé selon la revendication 1 ou 2,
**caractérisé en ce que** le serveur d'application WebRTC utilise une interface ISC pour communiquer avec une fonction de commande de session d'appel de desserte/d'interrogation.

4. Procédé selon une des revendications précédentes,
**caractérisé en ce que** le serveur d'application WebRTC implémente H.248 Iq* pour commander la passerelle d'accès IMS améliorée en vue d'un traitement média.

5. Procédé selon une des revendications précédentes,
**caractérisé en ce que** le serveur d'application WebRTC est colocalisé alternativement avec la fonctionnalité de passerelle d'accès IMS améliorée dans la même entité de réseau pour des fonctions de gestion média convertissant entre sRTP et RTP.

6. Procédé selon une quelconque des revendications précédentes,
**caractérisé en ce que** le serveur d'application WEbRTC authentifie l'abonné WebRTC en utilisant un mécanisme d'authentification avec le résultat que le serveur d'application WebRTc connait l'IMPU de l'utilisateur WebRTC.

7. Procédé selon une des revendications précédentes,
**caractérisé en ce que** le serveur d'application WebRTC authentifie l'abonné WebRTC utilisant son identifiant confidentiel de sous-système multimédia IP en utilisant une interface Sh vers le serveur d'abonné résidentiel.

8. Système pour exécuter le procédé selon une des revendications précédentes,
comprenant un client WebRTC intégré dans un sous-système multimédia IP,
un serveur d'application WebRTC qui est implémenté dans le coeur de sous-système multimédia IP comme un serveur d'application avec accès direct au serveur d'abonné & résidentiel,
moyennant quoi le client WebRTC est configuré pour s'enregistrer sur le serveur d'application WebRTC en utilisant un protocole appliquant des identifiants confidentiels de sous-système multimédia IP en raison de l'accès du serveur d'application WebRTC au serveur d'abonné résidentiel, moyennant quoi le serveur d'application WebRTC est configuré pour modifier des critères de filtre initiaux en s'entrant soi-même dans les critères de filtre initiaux réglés dans le serveur d'abonné résidentiel lors d'un enregistrement réussi du client WebRTC sur le serveur d'application WebRTC et en se supprimant soi-même des critères de filtres initiaux réglés dans le serveur d'abonné résidentiel lors d'un désenregistrement du client WebRTC.

9. Système selon la revendication 8,
**caractérisé par** une interface W2* entre le client WebRTC et le serveur d'application WebRTC pour échanger des messages de signalisation.
